# EUROPÄISCHE PATENTANMELDUNG

(11) **EP 0 840 017 A2**
(43) Veröffentlichungstag der Anmeldung: **06.05.1998**
(21) Anmeldenummer: 97117845.4
(22) Anmeldetag: 15.10.1997
(51) Int. Cl.: F15B 5/00, G05D 7/06

(54) **Elektrohydraulische Druckstellvorrichtung und Verfahren zur Umwandlung elektrischer Stellsignale in hydraulischen Stelldruck**

(30) Priorität: 30.10.1996 DE 19643788
(71) Anmelder: Voith Turbo GmbH & Co. KG, 89522 Heidenheim (DE)
(72) Erfinder: Dick, Heinrich, 89564 Nattheim (DE)
(74) Vertreter: Dr. Weitzel & Partner

(57) **Zusammenfassung**

Die Erfindung betrifft eine elektrohydraulische Druckstellvorrichtung (1), mit einer Aktorikbaueinheit (3) und einer, mit dieser lösbar koppelbaren Hydraulikbaueinheit (2), umfassend wenigstens ein Ventilgehäuse, einen an eine Druckmittelquelle anschließbaren Eingang und einen, mit einem Verbraucher koppelbaren Ausgang. Die Aktorikbaueinheit (3) umfaßt wenigstens einen Magnetantrieb (4) zur Ansteuerung wenigstens eines Steuergliedes der Hydraulikbaueinheit und eine Regeleinrichtung (5), umfassend wenigstens einen Magnetkraftregler. Dem Steuerglied ist eine Einrichtung zur Erzeugung einer entgegen der von dem Magnetantrieb die Steuereinrichtung beaufschlagenden Magnetkraft gerichteten Kraft zugeordnet. Erfindungsgemäß ist die Hydraulikbaueinheit ist als Schieberventil mit wenigstens noch einem Abfluß und wenigstens drei Schaltstellungen ausgeführt. Die Einrichtung zur Erzeugung einer der Magnetkraft entgegengerichteten Kraft ist eine Energiespeichereinheit. Die Regeleinrichtung umfaßt einen Druckregler, in welchem der Magnetkraftregler integriert ist. Der Druckregler (50) weist wenigstens zwei Eingänge auf, wobei der erste Eingang mit einer Einrichtung zur wenigstens mittelbaren Vorgabe eines Sollwertes für den einzustellenden Stelldruck und der zweite Eingang mit einer Erfassungseinrichtung zur Ermittlung des Stelldruckes im Ausgang der Hydraulikbaueinheit (2) gekoppelt ist. Der Druckregler (50) weist wenigstens einen ang auf, der mit dem Magnetantrieb gekoppelt ist.

## Beschreibung

Die Erfindung betrifft eine elektrohydraulische Druckstellvorrichtung, im einzelnen mit den Merkmalen aus dem Oberbegriff des Anspruches 1; ferner ein Verfahren zur Umwandlung elektrischer Stellsignale in hydraulischen Stelldruck.

Elektrisch steuerbare hydraulische Baugruppen zur Beeinflussung des Druckwertes eines Volumenstromes sind in einer Vielzahl konkreter Ausführungen und Einsatzmöglichkeiten beispielsweise aus den nachfolgend genannten Druckschriften bekannt:
(1) Voith-Prospekt "Sensorik und elektrohydraulische Aktorik" CR 207d 05/94.1.
(2) DE-AS 2 019 345
(3) DE 36 07 329 C2
(4) DE-PS 27 20 877
(5) DE 35 36 671
(6) DE 39 05 023 C2
(7) Prospekte Mannesmann Rexroth: RD 29175/03.93, RD 29148/12.83, RD 29148/12.83, RD 25586/09.89

Aus der Druckschrift (1) ist eine gattungsgemäße Druckstellvorrichtung zur proportionalen und dynamischen Wandlung elektrischer Steuersignale in einen Stelldruck, umfassend einen sogenannten Aktorikteil und einen, mit diesem gekoppelten Hydraulikteil in Form eines Druckreduzierventiles bekannt. Hauptbestandteil des Aktorikteils ist dabei ein kraftgeregelter Elektromagnet, bestehend aus einem Magnetgehäuse, einer Magnetspule, einem Anker mit Stößel und einer Regelelektronik. Die auf den Anker einwirkende Kraftliniendichte wird dabei durch einen Regler auf einem, dem Eingangssignal in Form eines die Magnetspule durchsetzenden Stromes proportionalen Wert gehalten. Damit ist die Ausgangsgröße in Form einer Kraft bzw. einem der Kraft proportionalen Druck, wie in der Druckschrift (2) beschrieben, unabhängig von Störeinflüssen, wie beispielsweise der Eisenhysterese, dem Luftspalt. Mit der Aktorikbaugruppe werden Kräfte erreicht, die beispielsweise über einen Stößel direkt, also ohne hydraulische Zwischenverstärkung, auf einen Steuer- bzw. Ventilkolben oder einen Wegschieber der Hydraulikeinheit, welche dabei als Druckreduzierventil ausgeführt ist, wirken. Ein direkter und stetiger Zusammenhang zwischen dem Eingangssignal und dem als Ausgangssignal ausgegebenen reduzierten Druck wird dadurch erreicht, daß der eingeprägten Magnetkraft auf der einen Stirnseite des Ventilkolbens des Druckreduzierventiles eine dem reduzierten Druck proportionale Kraft entgegenwirkt. Bei der in der Druckschrift (1) beschriebenen elektrohydraulischen Druckstellvorrichtung wird eine geregelte und direkt wirkende Magnetkraft mit einer hydraulischen, druckproportionalen Kraft ins Gleichgewicht gebracht. Dem Eingangssignal wird dabei ein bestimmter festgelegter und unveränderlicher Ausgangsdruck zugeordnet. Dieser Ausgangsdruck wird unabhängig von den Eingangssignalen konstant gehalten.

Die Druckschrift (2) beschreibt Ausführungen der Aktorikbaugruppe in Form eines kraftgeregelten Elektromagneten, insbesondere einen Magnetantrieb in Form eines Tauchankerelektromagneten, wie sie für die aus der Druckschrift (1) bekannte Druckstellvorrichtung Verwendung finden kann, und Möglichkeiten der Regelung der Ankeranzugskraft. In Abhängigkeit von der magnetischen Feldstärke wird ein, eine elektrische Steuergröße erzeugendes Geberelement im Arbeitsluftspalt zwischen Anker und Ankergegenpol angeordnet und mit einer Regelschaltung für den Erregerstrom in der Weise zusammengeschaltet, daß im Arbeitsluftspalt eine vorgegebene Feldstärke und damit eine bestimmte Ankeranzugskraft, unabhängig von der Stellung des Ankers innerhalb der Ankerhubstrecke, einregelbar ist. Als Geberelement kann dabei beispielsweise ein magnetfeldabhängiger Widerstand oder ein Hallgenerator vorgesehen werden. Als Geberelement kann des weiteren auch eine im Spuleninneren angebrachte Hilfswicklung vorgesehen sein, die mit einer Integrierschaltung für die in der Hilfswicklung induzierte Spannung zusammenarbeitet. Auch die Selbstinduktion der Erregerspule kann als Meßgröße zur Regelung auf eine bestimmte Feldstärke dienen.

Aus der Druckschrift (3) ist ein Steuerventil in Form eines kombinierten elektromagnetischen Schalt- und Druckregelventiles bekannt. Die Kraft des am Ventilkörper angreifenden und diesen verstellenden Anker des Elektromagneten ist durch eine Änderung der Magnetfeldstärke einregelbar, wobei im Elektromagneten zur Ermittlung einer den Istwert bildenden Meßgröße für die augenblickliche magnetische Induktion und somit die erzeugte Magnetkraft eine Einrichtung zur Erzeugung einer der zeitlichen Induktionsänderung proportionalen Meßspannung vorgesehen ist, an die wenigstens ein Integrationsglied angeschlossen ist, das die Meßspannung in die der Induktion proportionale Meßgröße umwandelt. Des weiteren ist ein Regelglied vorgesehen, das durch Vergleich des vom Integrationsglied abgegebenen Istwertes und eines von der Steuerschaltung vorgegebenen Sollwertes eine Stellgröße für den Erregerstrom des Elektromagneten erzeugt, so daß die Magnetkraft und darüber der Druck des das Schaltelement betätigenden Druckmittels auf einen dem Sollwert entsprechenden Wert eingeregelt wird.

Aus der Druckschrift (4) ist eine Druckstellvorrichtung entsprechend der Druckschrift (1) mit einer weiteren Möglichkeit der Gestaltung der Aktorik, d.h. des Magnetantriebes, offenbart. Der Elektromagnet weist dabei eine Regeleinrichtung gemäß der in der Druckschrift (2) offenbarten und ein mit dem Tauchanker verbundenes und durch das Polstück hindurchgeführtes Stellglied auf, das die Ankeranzugskraft auf den Ventilkörper eines Druckventils überträgt oder selbst den Ventilkörper bildet. Die Regeleinrichtung ist dabei in einem zwischen dem Polstück und der zu betätigenden Einrichtung liegenden Zwischenraum im Inneren des Gehäuses angeordnet. Bei der zu betätigenden Einrichtung handelt es sich dabei beispielsweise um den Steuerkolben eines Druckreduzierventiles. Die Regeleinrichtung ist einer der Stirnseiten des Elektromagnetgehäuses zugeordnet, und zwar derjenigen Stirnseite, an der sich das Polstück befindet. Eine Weiterentwicklung der Integration der Regelelektronik im Inneren der Druckstellvorrichtung, insbesondere die Gestaltung und Anordnung der Geberelemente ist in der Druckschrift (6) beschrieben. Dort ist das Polstück in zwei voneinander magnetisch isolierte Teile unterteilt, wobei das Geberelement zwischen den Polstückteilen angeordnet wird.

Dem gegenüber offenbart die Druckschrift (5) eine Weiterentwicklung der Gestaltung der Hydraulikeinheit der Druckstellvorrichtung gemäß der Druckschrift (4). Der Hydraulikteil weist dabei einen kolbenartigen, topfförmig gestalteten Ventilkörper auf in dessen Wand mehrere über den Umfang verteilte Radialbohrungen angeordnet sind. In der Ruhestellung des Ventilkörpers verbinden die Radialbohrungen einen Verbraucherkanal mit einem Entlastungskanal. In einer entgegengesetzten Einstellung verbinden die Radialbohrungen den Verbraucherkanal mit einer Druckmittelquelle. Das Verstellen des Ventilkörpers aus der Ruhestellung erfolgt dabei durch die von dem Elektromagneten erzeugte Stellkraft. In einer mittleren Stellung, in der die Radialbohrungen weitgehend abgedeckt sind, stellt sich ein Gleichgewichtszustand zwischen der auf einen Sollwert einregelbaren Stellkraft und der Gegenkraft, die aus dem Verbraucherkanal resultiert, ein.

Die in den Prospekten der Firma Mannesmann Rexroth offenbarten Druckreduzierventile dienen der Einstellung des Druckes stromabhängig über einen Proportionalmagneten. Die Druckreduzierventile umfassen im wesentlichen ein Vorsteuerventil mit einem Proportionalmagneten, das Hauptventil mit dem Hauptkolbeneinsatz sowie wahlweise auch Rückschlagventile. Bei drucklosem Anschluß wird der Hauptkolben über eine Feder in Ausgangsstellung gehalten. Die Druckreduzierung erfolgt durch den Aufbau eines Vorsteuerdruckes als Funktion des Sollwertes des einzustellenden Druckes. Dieser bewirkt ein Verschieben des Hauptkolbens dahingehend, daß die Druckflüssigkeit vom Druckanschluß zum Ausgang fließt. Am Ausgang liegt der Verbraucherdruck an. Dieser Druck am Anschluß A steigt auf den eingestellten Druck des Vorsteuerventiles an und bewirkt das Verschieben des Hauptkolbens wieder in die entgegengesetzte Richtung.

Die aus den genannten Druckschriften (1) bis (7) bekannten Druckstellvorrichtungen unterscheiden sich hinsichtlich der konstruktiven Gestaltung ihrer Aktorik und/oder der Hydraulikbaueinheit sowie der Strategie bezüglich der Einstellung des Ausgangsdruckes. Es erfolgt keine Druckrückführung. Die in den Druckschriften (1) bis (6) vorgestellten Lösungen, welche eine sogenannte Druckwaage aufweisen, sind jedoch nur für Druckwerte bis maximal 30 bar geeignet, da die zur Verstellung erforderlichen Magnetkräfte mit dem Druck überproportional steigen und die erforderlichen Rückstellkräfte sehr hoch sind. Auch beruhen die in den Druckschriften (1) bis (6) offenbarten Regelstrategien auf einer Druckreduzierung auf einem bestimmten Wert. Ein weiterer wesentlicher Nachteil besteht darin, daß eine hysteresefreie, lineare und genaue Umsetzung des elektrischen Stellsignales in den hydraulischen Stelldruck ohne Fehlerquote nicht möglich ist. Insbesondere die Lösungen gemäß den Druckschriften (7) sind ungenau, nicht linear, aufwendig, neigen zu Schwingungen und reduzieren die Verfügbarkeit.

Der Erfindung liegt daher die Aufgabe zugrunde, eine Druckstellvorrichtung der eingangs genannten Art derart weiterzuentwickeln, daß eine hysteresefreie, möglichst lineare und genaue Umsetzung elektrischer Stellsignale in hydraulischen Stelldruck erzielt wird. Insbesondere soll mit nur einer Ausführung mit geringem konstruktiven Aufwand ein möglichst großer Stellbereich überdeckt werden können. Des weiteren sind eine einfach und leicht zu realisierende Integration in Steuer- und Regelsysteme sowie eine einfache Inbetriebnahme anzustreben.

Die erfindungsgemäße Lösung der Aufgabe ist durch die Merkmale des Anspruchs 1 charakterisiert. Vorteilhafte Ausgestaltungen sind in den Unteransprüchen wiedergegeben.

Erfindungsgemäß wird eine Druckstellvorrichtung der eingangs genannten Art, welche wenigstens eine Aktorikbaueinheit und eine von dieser ansteuerbare Hydraulikbaueinheit umfaßt, dahingehend modifiziert, daß die Hydraulikbaueinheit, welche wenigstens einen Ventilkörper, einen im Ventilkörper in einer Bohrung geführten Ventilkolben sowie wenigstens einen Eingang, einen Ausgang und einen Abfluß aufweisen, die an entsprechende Zu-, Ablauf- und Abflußleitungen anschließbar sind, als Schiebeventil, insbesondere als 3/3-Wegeventil, ausgeführt wird. Ventilkörper und Bohrung weisen Steuerkanten auf. Der Ventilkolben ist dabei vom Stellglied der Aktorikbaueinheit, insbesondere vom Steuerkolben des Regelmagneten, mit einer Kraft beaufschlagbar. Die im Stand der Technik erfolgende Gleichgewichtseinstellung der Kräfte am in seiner Position veränderbaren Ventilkolben mittels hydraulisch aufgebrachtem Druck wird durch mechanisch erzeugten Druck, vorzugsweise aufgrund von Federkraft, ersetzt. Dazu ist eine sogenannte Federspeichereinheit vorgesehen, die wenigstens mittelbar an dem stirnseitigen Ende des Ventilkolbens, welches dem stirnseitigen Ende, das mit dem Regelmagneten bzw. mit dem Stellglied der Aktorikbaueinheit gekoppelt ist, gegenüberliegt, eine Kraft aufbringt. Zur stufenlosen Druckeinstellung am Ausgang und damit in der mit diesem gekoppelten Ablaufleitung ist das vorzugsweise als 3/3-Wegeventil ausgebildete Schieberventil als Proportionalventil bzw. Stetigventil ausgeführt, d.h., daß eine stufenlose Änderung bzw. stetige Freigabe der Zuordnung der einzelnen Anschlüsse und damit eine Kopplung der mit diesen Anschlüssen verbindbaren Leitungen - der Zulaufleitung, der Ablaufleitung und der Abflußleitung - realisierbar sind.

Vorzugsweise ist die sogenannte Nullstellung, bei welcher die einzelnen Ausgänge, d.h. die Zu- und Ablaufquerschnitte der Hydraulikbaueinheit blind verschlossen sind, die sogenannte Mittellage. Über einen ersten Regelkreis wird je nach Größe des Induktionssollwertes über den Spulenstrom eine Kraft vom Stellglied der Aktorikbaueinheit bzw. dem Magnetanker des Regelmagneten auf den Ventilkolben der Hydraulikbaueinheit gegen wenigstens eine Rückstellfeder aufgebracht. Diese bewirkt eine Verschiebung des Ventilkolbens zwischen zwei Grenzschaltstellungen - einer ersten Grenzschaltstellung und einer zweiten Grenzschaltstellung. In der ersten Grenzschaltstellung werden dabei die Querschnitte des Ausganges, an welchen eine, mit einem Verbraucher koppelbare Ablaufleitung anschließbar ist, und des Abflusses, der mit einer Rücklaufleitung koppelbar ist, freigegeben und somit eine Verbindung zwischen Ablaufleitung und Rücklaufleitung hergestellt. Vorzugsweise wird der Verbraucher in der ersten Grenzschaltstellung mit dem maximalen Ablaufquerschnitt verbunden. In der zweiten Grenzschaltstellung werden die Querschnitte des Einganges und Ausganges vom Ventilkolben freigegeben und dadurch eine Verbindung zwischen Zulaufleitung und Ablaufleitung erzielt, vorzugsweise wird der Verbraucher mit dem maximalen Zulaufquerschnitt verbunden. Entsprechend der Größe der gegen eine Rückstellfeder stetig steuerbaren Querschnitte zwischen Zulauf- und Ablauf stellt sich der Druck am Verbraucher ein. Die Federrate der Rückstellfeder bzw. Rückstellfedern (delta F_{Feder})/ delta s ist dabei größer als die maximale Magnetkraftrate delta F_{Magnet})/ delta s.

Zur Einstellung der erforderlichen Magnetkraft und damit eines bestimmten am Ausgang und der Ablaufleitung für den Verbraucher erforderlichen Stelldruckes in Form des Ausgangsdruckes PA ist dabei ein zweiter Regelkreis vorgesehen, welcher auch als Druckregelkreis bezeichnet wird.

Regelgröße ist ein direkt ein am Ausgang bzw. in der mit dem Verbraucher koppelbaren Ablaufleitung gewünschter Stelldruck PA oder eine, den gewünschten Stelldruck wenigstens mittelbar charkterisierende Größe. Die Vorgabe des zugehörigen Sollwertes erfolgt durch Zufuhr einer elektrischen Steuergröße, beispielsweise einer bestimmten, an der Aktorikbaueinheit anliegenden Signalstromstärke. Diese erzwingt dann über den zweiten Regelkreis einen zugehörigen von Strörgrößen unabhängigen und vorzugsweise proportionalen Stelldruck PA. Im Druckregelkreis wird der Sollwert mit dem aktuellen Istwert verglichen, d.h. beispielsweise direkt der vorgegebene Sollwert W_{pAsoll} mit einem mittels eines, ebenfalls in der Druckstellvorrichtung integrierten Drucksensors in der auch als Verbrauchsleitung bezeichneten Ablaufleitung ermittelten aktuellen Istwertes des Stelldruckes pAᵢₛₜ. Bei Abweichung wird eine Stellgröße ausgegeben, welche wiederum als Sollwert eines ersten Regelkreises zur Regelung der Magnetkraft fungiert. Dieser Sollwert kann dabei direkt die erforderliche einzustellende Magnetkraft oder aber eine dieser proportionale Größe sein, beispielsweise die erforderliche magnetische Induktion W_{B}. Der als Führungsgröße vorgegebene Sollwert W_{B} wird mit einem direkt erfaßten oder indirekt ermittelten Istwert Bᵢₛₜ verglichen und bei Abweichung eine Stellgröße Y für den Erregerstrom des Regelmagneten erzeugt, so daß über eine Änderung des Erregerstromes eine Änderung der magnetischen Induktion und damit der erzeugten Magnetkraft zur Erzeugung eines Druckes auf den Schieber bzw. den Ventilkolben des Schieberventiles erzielt wird.

Die Druckregelung erfolgt dabei beispielsweise mittels einer Regeleinrichtung mit PID-Verhalten, d.h. mit verzögerter und nachgebender Druckrückführung. Vorzugsweise findet eine Regeleinrichtung mit PI-Verhalten Anwendung.

Der erste Regelkreis ist in der Regelstrecke des zweiten Regelkreises integriert, d.h. die Magnetkraftregelung ist der Druckregelung unterlagert.

Vorrichtungsmäßig können dazu die Funktionen der Druckregelung und damit der Druckregeleinrichtung und der Magnetkraftregelung bzw. der Magnetkraftregeleinrichtung von einen Magnetantrieb mit integrierter Regelelektronik und Sensorik für Druck und Induktion ausgeführt werden. Der Magnetantrieb umfaßt dabei einen sogenannten Druckregler und einen, in diesen eingeschlossenen Magnetkraftregler. Die dazu erforderlichen Bauteile sind in der Regelektronik zusammengefaßt, diese kann daher baulich betrachtet als zentrale Steuer- und Regeleinrichtung bezeichnet werden. Die Regelelektronik ist dazu im Inneren des Regelmagneten angeordnet, im einzelnen zwischen Polstück und Gehäuse. Für den konkreten Aufbau der Regelelektronik und die Realisierung der einzelnen Funktionen mittels elektronischer Bauelemente sind eine Vielzahl von Möglichkeiten denkbar, beispielsweise wird dazu auf die Ausführungen entsprechend den in den eingangs genannten Druckschriften (2), (4) und (6) verwiesen, deren Inhalt diesbezüglich zum Offenbarungsgehalt dieser Anmeldung gehören soll. Die Auswahl liegt im Ermessen des Fachmannes, weshalb auf die Ausführung der Regelelektronik im einzelnen nicht eingegangen wird.

Die erfindungsgemäße Lösung zeichnet sich dadurch aus, daß zum einen die Druckregelung direkt durch Ansteuerung des Ventilkolbens des Steuerventiles bzw. des 3/3-Wegeventiles erfolgen kann und diese Magnetkraft, welche sich mechanisch in einem Verschiebeweg des Ventilkolbens äußert, direkt in einen Druck umgesetzt wird. Die sonst zur Auswäägung erforderlichen hohen hydraulischen Rückführkräfte werden durch den Einsatz der Energiespeichereinrichtung, vorzugsweise der Federeinrichtung vermieden. Des weiteren baut die erfindungsgemäße Einheit sehr kompakt und zeichnet sich durch eine lineare Umsetzung eines elektrischen Stellsignales über eine vorzugsweise relativ große und exakt steuerbare Magnetkraft direkt in einen hydraulischen Stelldruck aus. Mit dieser erfindungsgemäß gestalteten Druckstellvorrichtung können gegenüber einer Ausführung aus dem Stand der Technik wesentlich größere Stellbereiche für den auszugebenden Stelldruck realisiert werden.

Die erfindungsgemäße Lösung wird nachfolgend anhand von Figuren erläutert. Es zeigen:
- Fig. 1a: eine konstruktive Ausführung einer erfindungsgemäß gestalteten Druckstellvorrichtung in einem Axialschnitt;
- Fig. 1b: eine Ansicht A gemäß Figur 1a;
- Fig. 1c: eine schematische Darstellung des Aufbaus der Druckstellvorrichtung;
- Fig. 2: eine weitere konstruktive Ausführungsmöglichkeit einer erfindungsgemäß gestalteten Druckstellvorrichtung;
- Fig. 3a: ein Signalflußbild zur Verdeutlichung der einzelnen Steuer- und Regelaufgaben;
- Fig. 3b: ein Diagramm zur Verdeutlichung des Verhältnisses von Stelldruck zum mittels elektrischen Stellsignal vorgebbaren Sollwert.

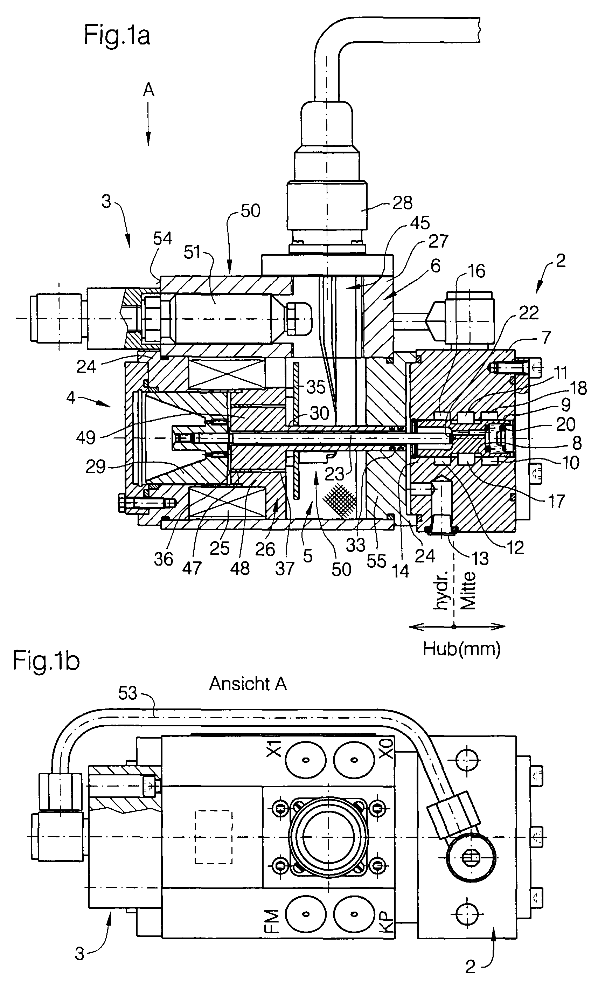

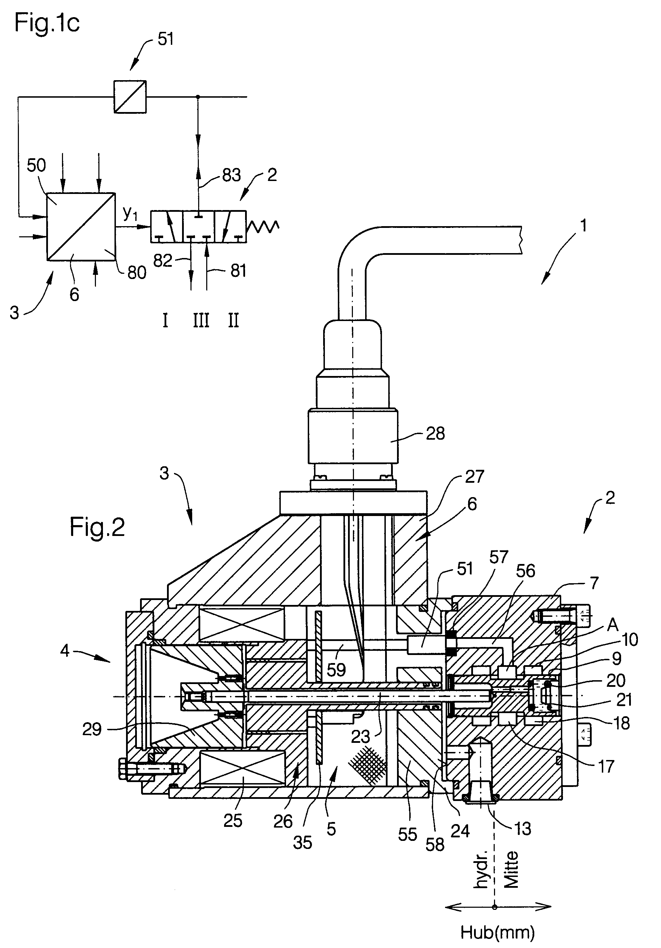

Die Figuren 1 und 2 verdeutlichen konstruktive Ausführungen einer elektrohydraulischen Druckstellvorrichtung 1. Die elektrohydraulische Druckstellvorrichtung 1 umfaßt eine Hydraulikbaueinheit 2 und eine, diese ansteuernde Aktorikbaueinheit 3. Die Aktorikbaueinheit 3 umfaßt einen Magnetantrieb 4 mit integrierter Regelelektronik 5. Der Magnetantrieb 4 und die Regelelektronik sind in einem sogenannten Regelmagneten 6 zusammengefaßt.

Die Hydraulikbaueinheit 2 ist als Schieberventil, vorzugsweise als 3/3-Wegeventil ausgeführt. Dieses umfaßt ein Ventilgehäuse 7 mit einer im wesentlichen zentrischen Bohrung 8 für einen Ventilkolben 9, ferner einen Eingang 10, einen Ausgang 11, einen Abfluß 12 und eventuell einen Leckölabfluß 13. Der Eingang 10 ist dabei einem Ringraum 18, der Ausgang 11 einem Ringraum 17 und der Abfluß 12 einem Ringraum 16 zugeordnet. Die Ringräume sind mit der Bohrung 8 verbindbar und aufgrund einer entsprechenden Gestaltung des Außenumfanges 14 des Ventilkolbens 9 mit Steuerkanten gegeneinander bei entsprechender Position des Ventilkolbens absperrbar. Der Eingang 10 ist dabei an eine hier im einzelnen nicht dargestellte Druckleitung einer Pumpe, welche auch als Zulaufleitung bezeichnet wird, anschließbar. Entscheidendes Kriterium für den über diese Zulaufleitung dem Eingang 10 zugeführten Volumenstrom ist der Druckwert p1 des zugeführten Volumenstromes. An den Ausgang 11 ist eine hier im einzelnen nicht dargestellte und auch als Ablaufleitung bezeichnete Leitung anschließbar, die den geregelten Druck, d.h. den als hydraulische Ausgangsgröße ausgebbaren Stelldruck, einem hier nicht dargestellten Verbraucher zuführt. Der in der mit dem Ausgang 11 verbundenen Leitung anliegende geregelte Stelldruck wird mit PA bezeichnet. Der Abfluß 12 dient dem Rücklauf von Betriebsmittel. Der Ventilkolben 9 ist derart ausgeführt, daß dieser mit seinen von seinem Außenumfang 14 gebildeten Steuerkanten den Eingang 10 und/oder den Ausgang 11 und/oder den Abfluß 12 bei axialer Verschiebung in der Bohrung 8 wenigstens teilweise verschließen kann. Zu diesem Zweck sind dem Eingang 10, dem Ausgang 11 und dem Abfluß 12 entsprechende Ringräume 16, 17, 18 zugeordnet. Diese weisen einen größeren Innendurchmesser DI als die zentrische Bohrung 8 auf. An der einen Stirnseite 19 des Ventilkolbens 9 ist eine Energiespeichereinrichtung 20 in Form wenigstens einer Federeinheit 21 angeordnet. Diese ist vorzugsweise vorgespannt. Sie übt eine Kraft auf die Stirnseite 19 des Ventilkolbens 9 aus. Diese Kraft ist der vom Stellglied der Aktorikbaueinheit 3 auf den Ventilkolben 9 aufgebrachten Magnetkraft entgegengerichtet. Dazu ist der Ventilkolben 9 vorzugsweise in dem stirnseitigen Endbereich 19 des Ventilkolbens 9 topfförmig ausgestaltet. Der topfförmig ausgestaltete Bereich dient dabei der Aufnahme der Energiespeichereinheit in Form der Federeinheit 21.

Auf der der Stirnseite 19 gegenüberliegenden Stirnseite 22, bzw. in deren Bereich greift eine Stellstange 23 an, die das Stellglied eines insgesamt mit 6 bezeichneten Regelmagneten und damit der Aktorikbaueinheit 3 bildet. Der Regelmagnet 6 umfaßt im wesentlichen ein Magnetgehäuse 24, eine Magnetspule 25, ein in zwei im wesentlichen magnetisch voneinander isolierte Polteilstücke 48 und 49 unterteiltes Polstück 26, einen Anschlußstutzen 27 für eine elektrische Steckverbindung 28, die zum Zuführen einer elektrischen Führungsgröße und zur Energieversorgung dient. Des weiteren umfaßt der Regelmagnet 6 einen beweglichen Tauchanker 29, in den die Stellstange 23 eingeschraubt ist. Zur Lagerung der Stellstange 23 mit dem Tauchanker 29 ist einerseits am Ende des Polgehäuses 36 ein eingesetztes Gleitlager 31 vorgesehen und andererseits eine am anderen Ende der Druckstange zentrierte Lagerung direkt im Ventilkolben, so daß für den Magnetantrieb insgesamt nur ein Lager benötigt wird. In dem zwischen Polstück 26 und dem Ventilgehäuse 7 befindlichen Zwischenraum ist eine Leiterplatte 35 für eine als Regeleinrichtung dienende Regelelektronik 5 an das Polstück 26 angesetzt. Die Regeleinrichtung bzw. Regelelektronik 5 dient zum Konstanthalten der Ankeranzugskraft auf einen Wert, der durch eine Führungsgröße (Sollwert für einen einzustellende Magnetkraft F_{Magnet}) vorgegeben werden kann, wobei die Ankeranzugskraft unabhängig von der Stellung des Tauchankers 29 in der Ankerhubstrecke ist. Als Regelgröße (Meßgröße) dient hierbei die sich zwischen dem Polstück 26 und dem Tauchanker 29 einstellende magnetische Induktion B, die dort z.B. durch einen Hallgenerator 36 gemessen wird. Dieser ist über beispielsweise vier Leitungen 37 bis 40 - zwei Meßleitungen 37 und 38 und zwei, hier im einzelnen nicht dargestellte Steuerstromleitungen 39 und 40 - mit der Leiterplatte 35 verbunden. Von diesen vier Leitungen ist jedoch nur eine mit 37 angedeutet. Der Hallgenerator ist dabei vorzugsweise in dem zwischen den magnetisch isolierten Polteilstücken 48 und 49 gebildeten Spalt 47 angeordnet. Das Einstellen der Ankeranzugskraft erfolgt durch Verändern des durch die Magnetspule 25 fließenden Erregerstromes über eine Regelschaltung. Auf der Leiterplatte 35 sind hier im einzelnen nicht dargestellte Elektronikbauteile der Regeleinrichtung angeordnet. Die von der elektrischen Steckverbindung 28 zur Leiterplatte 35 führenden Anschlußleitungen sind hier mit 45 bezeichnet. Die Magnetspule 25, das Polstück 26 und die Leiterplatte 35 sind in Achsrichtung durch hier im einzelnen nicht dargestellte Sicherheitseinrichtungen fixiert. Beispielsweise können diese als Sicherungsringe ausgeführt sein. Die Leiterplatte 35 ist als kreisrunde Scheibe ausgeführt, durch deren Zentrum aus Gründen der Platzersparnis, d.h. um eine möglichst kleine Gesamtbaulänge zu erzielen, ein Führungshals zur Trennung von Elektronik und Hydralik hindurchragt.

Damit die Bewegungen der Stellstange 23 nicht behindert werden, verbleibt um diese vorzugsweise ein Luftspalt.

Bezüglich der Beschreibung der Ausführung der Regeleinrichtung bzw. der Regelelektronik kann des weiteren auch auf die eingangs genannten Druckschriften DE 27 20 877 und DE 39 05 023 C2 in ihrer Gesamtheit verwiesen werden. Die Regeleinrichtung selbst kann, wie in der Druckschrift DE-AS 20 19 345 offenbart, ausgeführt sein. Die Offenbarung dieser Druckschriften soll diesbezüglich in seiner Gesamtheit in diese Anmeldung einbezogen sein. Zur Realisierung der Druckregelung ist ein Druckregler 50 vorgesehen. Dieser umfaßt im wesentlichen einen Drucksensor 51, welcher mit dem Ausgang 11 gekoppelt ist. Ansonsten ist der Druckregler 50 Bestandteil der Regelelektronik 5. In der dargestellten Ausführung ist der Drucksensor 51 als Baueinheit zwischen der elektrischen Steckverbindung 28 und dem Regelmagneten 6 angeordnet. Die Anordnung im Bereich der Aktorikbaueinheit 3 hat zur Folge, daß eine Verbindung zum Ausgang 11 geschaffen werden muß. Diese Verbindung erfolgt, wie in einer Ansicht A in Figur 1b schematisch dargestellt, über eine Leitung 53. Diese erstreckt sich im wesentlichen von der äußeren Stirnseite 54 des Regelmagneten 6, über die gesamte Erstreckung der Druckstellvorrichtung 1 in axialer Richtung bis zum Ausgang 11 der Hydraulikbaueinheit 2.

Bei der als 3/3-Wegeschieber bzw. Wegeventil ausgeführten Hydraulikbaueinheit 2 handelt es sich vorzugsweise um ein sogenanntes Stetigventil, d.h. ein stetig veränderlich einstellbares Wegeventil. Dies bedeutet, daß nicht lediglich drei Schaltstellungen möglich sind, sondern zwischen diesen Schaltstellungen stufenlos eine Vielzahl von möglichen Stellungen realisiert werden können. Der Ventilkolben 9 gibt dabei durch die entsprechende Gestaltung seines Außenumfanges 14 die Querschnitte von Eingang 10, Ausgang 11 und Abfluß 12 wahlweise und in bestimmter Zuordnung zueinander frei. In der Darstellung befindet sich der Ventilkolben 9 in seiner hydraulischen Mittelstellung, welche auch als Nullstellung bezeichnet wird. Dies bedeutet, der Eingang 10, der Ausgang 11 und der Abfluß 12 sind voneinander gänzlich entkoppelt. Die in der Figur 1c dazu schematisch dargestellten, mit dem Eingang 10, dem Ausgang 11 und dem Abfluß 12 gekoppelten Leitungen, d.h. für den Eingang 10 die Zulaufleitung 81, für den Ausgang 11 die mit einem Verbraucher koppelbare auch als Verbrauchs- oder Verbindungsleitung bezeichnete Leitung 83 und für den Abfluß 12 die Rücklaufleitung 82, sind blindgeschalten. In diesem Fall stellt sich am Ausgang ein stationärer Ausgangsstelldruck ein - bzw. dieser entspricht dem aktuellen Sollwert W_{pAsoll} sinkt auf Null. Dies entspricht der in Figur 1c dargestellten Mittelstellung III. In einer ersten Grenzschaltstellung des Ventilkolbens 9 der Hydraulikbaueinheit 2 wird der Querschnitt des Einganges 10, d.h. der Zulaufleitung 81, vollständig freigegeben und mit dem Ausgang 11, d.h. der Ablaufleitung 83, welche mit dem hier nicht dargestellten Verbraucher koppelbar ist, verbunden. Am Eingang 10 liegt der Druck p1 an, am Ausgang 11 bzw. in der Ablaufleitung 83 der Stelldruck pA. Die erste Grenzschaltstellung ist dabei mit I und die zweite Grenzschaltstellung mit II bezeichnet. In der zweiten Grenzschaltstellung, d.h. bezogen auf die Darstellung in der Figur 1a bei Bewegung der Stellstange 23 nach links, wird der Eingang 10 gesperrt und die mit dem Verbraucher gekoppelte Leitung 83 am Ausgang 11 mit dem Abfluß 12, d.h. der Rücklaufleitung 82, verbunden. In diesem Fall erfährt der eingestellte Stelldruck zunehmend eine Verkleinerung bis auf Null.

Die hier dargestellte Ausführung eines 3/3-Wegeventiles soll im wesentlichen die Funktion der Hydraulikbaueinheit 2 verdeutlichen, auf Einzelheiten bei der konstruktiven Ausführung wird daher nicht eingegangen. Deren Gestaltung liegt im Ermessen des Fachmannes.

Die Figur 1b stellt eine Ansicht auf die elektrohydraulische Druckstellvorrichtung 1 von oben dar. Zu erkennen sind lediglich die elektrische Steckverbindung sowie das Gehäuse der Hydraulikbaueinheit 2 und des Regelmagneten 6. Die Regelelektronik 5 und die Sensorik zum Erfassen der Istwerte sowie die zur Verarbeitung dieser Werte erforderlichen Bauteile sind im Inneren des Regelmagneten 6 angeordnet.

In der Figur 1c ist der Aufbau der elektrohydraulischen Druckstellvorrichtung 1 in vereinfachter schematischer Darstellung wiedergegeben. Zu erkennen ist der Aktorikbaueinheit 3, welcher einen Regelmagneten 6 umfaßt und die Hydraulikbaueinheit 2, welche als Schieberventil in Form eines 3/3-Wegeventil ausgeführt ist. Wie bereits erläutert, handelt es sich bei dem 3/3-Wegeschieber um ein Proportionalventil, d.h., daß eine stetige Änderung der freigegebenen und verschlossenen Querschnitte der einzelnen Anschlüsse bzw. Zu- und Ablaufleitungen realisierbar ist. Zwischen den beiden Grenzschaltstellungen I und II ist stufenlos die Einstellung einer Vielzahl von Ventilkolbenstellungen möglich. Aus dieser schematischen Darstellung wird ersichtlich, daß der Drucksensor 51 der Erfassung des aktuellen am Ausgang 11 anliegenden Stelldruckes pAᵢₛₜ dient und der Regelelektronik 5 als zu verarbeitende Größe zugeführt wird. Des weiteren ist ersichtlich, daß der Regelmagnet 6 im wesentlichen zwei Regler bzw. Regeleinrichtungen umfaßt, eine zweite Regeleinrichtung 50 zur Einregelung des gewünschten Stelldruckes W_{pAsoll}, die auch als Druckregler bezeichnet wird, und eine erste Regeleinrichtung 80 zur Einregelung der für die zur Stelldruckeinstellung erforderlichen Verschiebung des Ventilkolbens aufzubringende Magnetkraft. Diese erste Regeleinrichtung wird auch als Magnetkraftregler bezeichnet und ist hier mit 80 bezeichnet. Die Regeleinrichtungen verarbeiten eine Sollgröße für einen am Ausgang 11 einzustellenden Stelldruck W_{pAsoll} bzw. ein Stellsignal für eine einem bestimmten Stelldruck entsprechenden Stromstärke W_{Isoll} und einen am Ausgang ermittelten Istwert pAᵢₛₜ. Die Ausgangsgröße der zweiten Regeleinrichtung, d.h. am Druckregler 50, die hier mit Y1 bezeichnet ist, ist eine am Ventilkolben von der Stellstange 23 aufgebrachte Kraft F_{Magnet}, die zur Verschiebung des Ventilkolbens 9 führt.

Die Figur 2 verdeutlicht eine Weiterentwicklung der erfindungsgemäß gestalteten Druckstellvorrichtung 1 gemäß der Figur 1. Für gleiche Elemente werden daher gleiche Bezugszeichen verwendet.

Aus der Figur 2 wird ersichtlich, daß die Position des Drucksensors 51 vom Umfang des Gehäuses 24 des Regelmagneten 6 in das Innere versetzt wurde. Insbesondere erfolgt die Anordnung des Drucksensors 51 zwischen der die Regelelektronik 5 zum großen Teil tragenden Leiterplatte 35 und dem an die Hydraulikbaueinheit 2 angrenzenden Teil 55 der Gehäusewand 24 des Regelmagneten 6. Auch diese Darstellung dient lediglich der Erläuterung der Funktion, die detaillierte konstruktive Umsetzung liegt dabei im Ermessen des Fachmannes, weshalb eine Beschreibung konstruktiver Einzelheiten nicht erfolgt. Ein Versetzen des Drucksensors 51 vom Außenumfang bzw. dem Bereich des Außenumfanges in das Innere des Regelmagneten 6, vorzugsweise in den für die Regelelektronik 5 vorgesehenen Bereich zwischen Polstück 26 und Gehäusewand 24 hat zur Folge, daß die Verbindungsleitung zwischen Drucksensor 51 und dem Ausgang 11 und damit der Ablaufleitung 83, welche mit dem mit Stelldruck zu beaufschlagenden Verbraucher gekoppelt ist, ebenfalls innerhalb der aus Aktorikbaueinheit 3 und hydraulischer Baueinheit 2 bestehenden Baueinheit angeordnet werden muß.
Zu diesem Zweck ist dem Ausgang 11 eine Abzweigung 56 zugeordnet, welcher sich bis in den Bereich einer Stirnseite 58, welche an das Gehäuse 24 des Regelmagneten 6 grenzt, erstreckt. Der Drucksensor 51 weist dazu einen Verbindungsstutzen 57 auf, welcher die Abzweigung 56 verschließt und der ein Halten des Drucksensors 51 in seiner Lage ermöglicht. Vorzugsweise ist dieser Stutzen in das Ventilgehäuse 7 einschraubbar. Der Drucksensor 51 ist des weiteren über elektrische Verbindungsleitungen, hier mit 59 bezeichnet, mit der Leiterplatte 35 gekoppelt. Zur Realisierung der Anordnung des Drucksensors 51 unmittelbar am Ventilgehäuse 7 ist das Gehäuse 24 des Regelmagneten 6 mit einer Durchgangsbohrung zu versehen.
Andere Möglichkeiten der Anordnung des Drucksensors im Inneren der Aktorikbaueinheit 3 in unmittelbarer Nähe des Ausganges 11 der Hydraulikbaueinheit sind denkbar, jedoch ermöglicht die in der Fig. 2 dargestellte Variante eine konstruktiv einfach zu realisierenden Ausführung, welche ohne erhebliche Veränderungen an den einzelnen Baueinheiten vorgenommen werden kann. Generell zeichnet sich die Versetzung vom Außenumfang in das Innere durch eine enorme Kompaktheit gegenüber den aus dem Stand der Technik bekannten Lösungen aus.

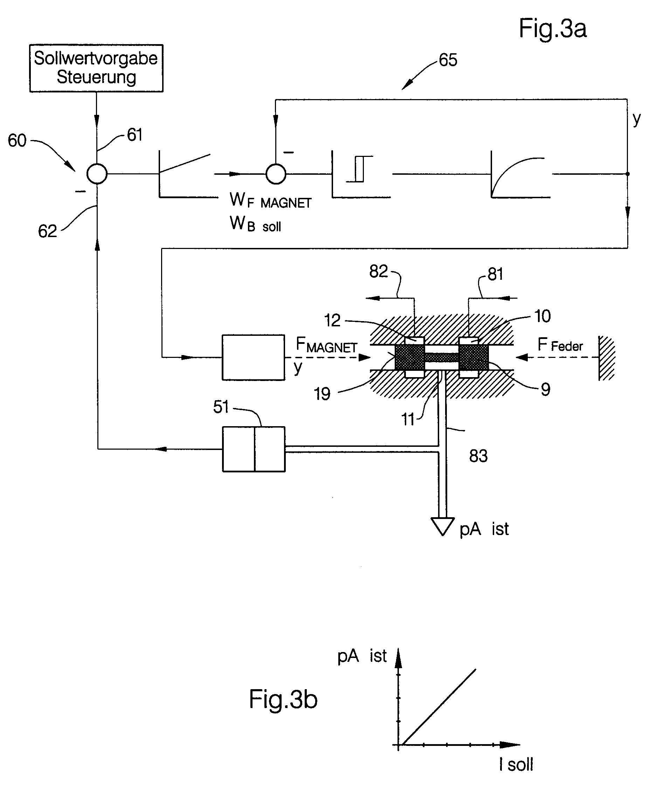

In der Figur 3a wird schematisch anhand eines Signalflußbildes die Funktion der elektrohydraulischen Druckstellvorrichtung 1 verdeutlicht. Die elektrohydraulische Druckstellvorrichtung 1 ist dabei Bestandteil einer Steuerung des mit dieser koppelbaren Verbrauchers, d.h. die Druckstellvorrichtung fungiert als Stellglied dieser Steuerung. Eingangsgröße dieser Steuerung ist ein elektrisches Signal, vorzugsweise eine bestimmte Größe der an der Steckverbindung angelegten Stromstärke Iₛₒₗₗ. Aus diesem Sollwert wird dann ein entsprechender Wert für den gewünschten Stelldruck in der Ablaufleitung gebildet. Die Bildung des Sollwertes des Stelldruckes W_{pAsoll} kann dabei durch Berechnung oder einfache Zuordnung über in einer Speichereinheit abgelegte Kennlinien oder Tabellen erfolgen. Die Druckregelung an der Druckstellvorrichtung erfolgt in einem ersten Regelkreis 60. Eingangsgrößen 61 und 62 sind dabei ein gewünschter sich am Ausgang, d.h. in der Ablaufleitung einstellender Stelldruck W_{pAsoll} sowie ein fortlaufend aktuell ermittelter Istwert des Stelldruckes in der Ausgangsleitung 83 pAᵢₛₜ. Stellglied zur Einstellung dieses Stelldruckes ist die hydraulische Baueinheit 2, welche vorzugsweise als 3/3-Wegeventil ausgeführt ist. Die Stellgröße zur Beeinflussung dieses Stellgliedes ist im vorliegenden Fall die die Position des Ventilkolbens 9 beeinflussende Größe der Magnetkraft F_{Magnet}, Die Magnetkraft F_{Magnet} entspricht der erforderlichen Betätigungskraft für die Verschiebung des Ventilkolbens 9 des 3/3-Wegeventiles zur Freigabe der einzelnen Leitungen - des Eingangs 10, des Ausgangs 11 und des Abflusses 12. Die Einstellung der Magnetkraft F_{Magnet} erfolgt dabei über einen weiteren ersten Regelkreis 65, welcher dem zweiten Regelkreis 60 unterlagert ist. Eingangsgröße dieses ersten Regelkreises 65 ist eine vom Druckregler gebildete Führungsgröße für die Magnetkraft F_{Magnetsoll}, welche auch proportional zur Magnet-Luftspaltinduktion Bₛₒₗₗ ist, die sich aus der Magnetkraft ermitteln läßt oder beispielsweise direkt Größe der erforderlichen die Magnet-Luftspaltinduktion Bₛₒₗₗ. Weitere Eingangsgrößen dieser Magnetkraftregelung sind dabei neben der vom Druckregler vorgegebenen Führungsgröße - die erforderliche Magnet-Luftspaltinduktion W_{Bsoll} - eine die aktuelle Magnet-Luftspaltinduktion Bᵢₛₜ wenigstens mittelbar charakterisierende Größe; vorzugsweise die tatsächliche Magnet-Luftspaltinduktion Bᵢₛₜ. Stellgröße für die Änderung bei Abweichungen ist die Stromstärke I des durch die Magnetspule fließenden Stromes. Aus der eingeregelten Magnet-Luftspaltinduktion B ergibt sich proportional dazu aufgrund der an stromdurchflossenen Leitern entstehenden Magnetfelder die Magnetkraft F_{Magnet}. Diese bewirkt durch Beaufschlagung der Stirnseite 19 des Ventilkolbens 9 ein Verschieben des Ventilkolbens 9 der Hydraulikbaueinheit 2 dahingehend, daß sich aufgrund der Freigabe zwischen den einzelnen Zu-, Ab- und Rücklaufleitungen in der Ablaufleitung ein entsprechender Stelldruck pA einstellt.

Die Erfassung des Istwertes des Druckes in der Ausgangsleitung erfolgt beispielsweise mittels eines Drucksensors 51. Des weiteren kann der aktuell anliegende Druck in der Ausgangsleitung auch über eine andere, zum Druck proportionale Größe indirekt ermittelt werden. In Analogie dazu kann die Magnet-Luftspaltinduktion B ebenfalls indirekt ermittelt werden, über eine, die Luftspaltinduktion B charakterisierende Größe. Dies sind im einzelnen die den stromdurchflossenen Leiter charakterisierenden Größen sowie die die magnetische Feldstärke H charakterisierenden Größen. Aus den Beziehungen zwischen der magnetischen Feldstärke H, welche sich um einen stromdurchflossenen Leiter ausbildet, und dem Strom kann die Stärke des an der Magnetspule anliegenden Stromes als die die Magnet-Luftspaltinduktion B charakterisierende Größe als Istwert ermittelt werden. Aus diesem Istwert kann dann problemlos die Magnet-Luftspaltinduktion B ermittelt werden.

Die in der Figur 3a verdeutlichte Regelstrategie zur Einstellung eines sogenannten Stelldruckes am Ausgang der Druckstellvorrichtung kann in eine übergeordnete Steuerung oder Regelung für den mit dem Stelldruck zu beaufschlagenden Verbraucher integriert sein.

In der Figur 3b ist in einem Diagramm die Abhängigkeit des geregelten Stelldruckes zum vorgegebenen Sollwert bei Betrachtung der Druckstellvorrichtung als Stellglied einer Steuerung des mit dem Stellglied gekoppelten Verbrauchers des in Form einer an der Druckstellvorrichtung anliegenden Stromstärke I, welcher proportional einem gewünschten Stelldruck ist, dargestellt.

Die vom Druckregler 50, d.h. im Regelkreis 60 ausgegebene Führungsgröße zur Regelung der Magnet-Luftspaltinduktion B wirkt vorzugsweise nach den Prinzipien der Flußdichteerfassung und der Regelung gemäß den Druckschriften DE 27 20 877 und DE 39 05 023 C2. Der Offenbarungsgehalt dieser Druckschriften soll dabei in den Offenbarungsgehalt dieser Anmeldung mit einbezogen werden. Andere Möglichkeiten sind ebenfalls denkbar.

## Patentansprüche

1. Elektrohydraulische Druckstellvorrichtung zur Umwandlung eines elektrischen Stellsignales in einen gewünschten hydraulischen Stelldruck
1.1. mit einer Aktorikbaueinheit (3) und einer, mit dieser lösbar koppelbaren Hydraulikbaueinheit (2), umfassend wenigstens ein Ventilgehäuse (7), einen an eine Druckmittelquelle anschließbaren Eingang (10) und einen, mit einem Verbraucher koppelbaren Ausgang (11);
1.2 die Aktorikbaueinheit (3) umfaßt wenigstens einen Magnetantrieb (4) zur Ansteuerung wenigstens eines Steuergliedes (9) der Hydraulikbaueinheit (2) und eine Regeleinrichtung (5);
1.3 dem Steuerglied (9) ist eine Einrichtung zur Erzeugung einer entgegen der von dem Magnetantrieb die Steuereinrichtung beaufschlagenden Magnetkraft gerichteten Kraft zugeordnet;
1.4 die Regeleinrichtung (5,6) umfaßt wenigstens einen Magnetkraftregler (80);
gekennzeichnet durch folgende Merkmale:
1.5 die Hydraulikbaueinheit ist als Schieberventil mit wenigstens noch einem Abfluß (12) und wenigstens drei Schaltstellungen (I, II, III) ausgeführt;
1.6 die Einrichtung zur Erzeugung einer der Magnetkraft entgegengerichteten Kraft ist eine Energiespeichereinheit (20);
1.8 die Regeleinrichtung (5) umfaßt einen Druckregler (50), in welchem der Magnetkraftregler (80) integriert ist;
1.9 der Druckregler (50) weist wenigstens zwei Eingänge auf -einen ersten Eingang und einen zweiten Eingang-, wobei der erste Eingang mit einer Einrichtung zur wenigstens mittelbaren Vorgabe eines Sollwertes für den einzustellenden Stelldruck und der zweite Eingang mit einer Erfassungseinrichtung zur Ermittlung des Stelldruckes im Ausgang (11) der Hydraulikbaueinheit (2) gekoppelt ist;
1.10 der Druckregler (50) weist wenigstens einen Ausgang auf, der mit dem Magnetantrieb (4) gekoppelt ist.

2. Druckstellvorrichtung nach einem der Anspruch 1, dadurch gekennzeichnet, daß das Schieberventil ein Stetigventil ist.

3. Druckstellvorrichtung nach einem der Ansprüche 1 oder 2 , gekennzeichnet durch folgende Merkmale:
3.1 die Hydraulikbaueinheit (2) ist als 3/3-Wegeventil ausgeführt, umfassend
3.1.1. eine im Ventilgehäuse angeordnete Bohrung (8);
3.1.2. einen in der Bohrung (8) als Steuerglied ausgeführten führbaren Ventilkolben (9), mittels welchem durch entsprechende Gestaltung von Steuerkanten an seinem Umfang und im Ventilgehäuse der Eingang (10) und/oder der Ausgang (11) und/oder der Abfluß (12) wenigstens teilweise frei- und/oder überdeckbar sind.

4. Druckstellvorrichtung nach Anspruch 2, dadurch gekennzeichnet, das der Ventilkolben (9) im Bereich seiner von der Aktorikbaueinheit (3) wegweisenden Stirnseite (19) eine topfförmig gestaltete Ausnehmung zur Führung und Aufnahme einer als Energiespeichereinheit ausgebildeten Federspeichereinheit aufweist.

5. Druckstellvorrichtung nach einem der Ansprüche 1 bis 4, gekennzeichnet durch folgende Merkmale:
5.1 der Magnetantrieb umfaßt einen Elektromagneten mit beweglichem Tauchanker (29) und ein, mit dem Tauchanker (29) verbundenes und mit dem Steuerglied (9) der Hydraulikbaueinheit (2) koppelbares Stellglied (23);
5..2 der Elektromagnet umfaßt eine Magnetspule (35), ein Polstück (26), welches bei erregtem Elektromagneten den Tauchanker anzieht, und ein Gehäuse (24);
5.3 das Stellglied ist durch das Polstück (26) und das Gehäuse (24) hindurchgeführt.

6. Druckstellvorrichtung nach Anspruch 5, dadurch gekennzeichnet, daß die Regeleinrichtung (5) in einem zwischen Polstück (26) und der Hydraulikeinheit liegenden Zwischenraum im Inneren des Gehäuses (24) angeordnet ist.

7. Druckstellvorrichtung nach einem der Ansprüche 5 oder 6, dadurch gekennzeichnet, daß das Stellglied als Stellstange (23) ausgeführt ist.

8. Druckstellvorrichtung nach einem der Ansprüche 5 bis 7, gekennzeichnet durch folgende Merkmale:
8.1 der Magnetkraftregler (80) weist wenigstens zwei Eingänge und einen Ausgang auf;
8.2 ein erster Eingang des Magnetkraftreglers (80) ist mit dem Druckregler (50) zur Vorgabe eines Sollwertes für eine, die Magnetkraft W_{FMagnetsoll} wenigstens mittelbar charakterisierenden Größe (Bₛₒₗₗ) und der zweite Eingang ist mit einem Geberelement zur wenigstens mittelbaren Erfassung eines Istwertes einer die Magnetkraft F_{Magnetist} wenigstens mittelbar charakterisierenden Größe (Bᵢₛₜ) gekoppelt;
8.3 der Ausgang ist mit einer Einrichtung zur Änderung der Erregerstromstärke des durch die Magnetspule (25) fließenden Stromes I gekoppelt.

9. Druckstellvorrichtung nach Anspruch 8, gekennzeichnet durch die folgenden Merkmale:
9.1 das Polstück (26) ist in zwei voneinander magnetisch isolierte Polstückteile (48, 49) unterteilt;
9.2 in einem, zwischen den beiden Polstückteilen gebildeten Spalt (47) ist wenigstens ein Geberelement zur Ermittlung einer der erzeugten Magnetkraft proportionalen Größe angeordnet.

10. Druckstellvorrichtung nach einem der Ansprüche 8 oder 9, dadurch gekennzeichnet, daß das Geberelement als Hallgenerator ausgeführt ist.

11. Druckstellvorrichtung nach einem der Ansprüche 8 oder 9, dadurch gekennzeichnet, daß das Geberelement als feldabhängiger Widerstand ausgeführt

12. Druckstellvorrichtung nach einem der Ansprüche 1 bis 11, dadurch gekennzeichnet daß der Druckregler als ein Regler mit PID-Verhalten ausgeführt ist.

13. Druckstellvorrichtung nach einem der Ansprüche 1 bis 11, dadurch gekennzeichnet daß der Druckregler als ein Regler mit PI-Verhalten ausgeführt ist.

14. Druckstellvorrichtung nach einem der Ansprüche 1 bis 13, gekennzeichnet durch folgende Merkmale:
14.1 die Einrichtung zur Erfassung einer den aktuellen Stelldruck am Ausgang (11) der Hydraulikeinheit wenigstens mittelbar charakterisierenden Größe ist am äußeren Umfang des Magnetgehäuses (24) angeordnet ist;
14.2 die Einrichtung zur Erfassung einer den aktuellen Stelldruck am Ausgang (11) der Hydraulikbaueinheit (2) charakterisierenden Größe ist über eine Leitung, welche sich entlang des Außenumfanges der Aktorikbaueinheit (3) erstreckt, mit dem Ausgang (11) und über eine elektrische Verbindung mit dem Druckregler (50) verbunden.

15. Druckstellvorrichtung nach einem der Ansprüche 1 bis 13, dadurch gekennzeichnet, daß die Einrichtung zur Erfassung einer den aktuellen Stelldruck am Ausgang (11) der Hydraulikeinheit wenigstens mittelbar charakterisierenden Größe in einem axialen Bereich im Inneren der Druckstellvorrichtung angeordnet ist, welcher sich im wesentlichen vom Polstück (26) bis zur Hydraulikbaueinheit (2) erstreckt.

16. Druckstellvorrichtung nach Anspruch 15, gekennzeichnet durch folgende Merkmale:
16.1 dem Ausgang (11) ist ein sich bis in den Bereich der zur Aktorikbaueinheit (3) weisenden Stirnseite der Hydraulikbaueinheit (2) erstreckender Abzweig (56) zugeordnet;
16.2 die Einrichtung zur Erfassung einer den aktuellen Stelldruck am Ausgang (11) der Hydraulikbaueinheit (2) charakterisierenden Größe weist ein Verbindungselement auf, welches eine Ermitllung des Druckwertes im Abzweig ermöglicht und diesen in Richtung des Einrichtung verschließt.

17. Druckstellvorrichtung nach Anspruch 16, dadurch gekennzeichnet, daß das Verbindungselement mit der Hydraulikbaueinheit verschraubbar ist.

18. Druckstellvorrichtung nach einem der Ansprüche 1 bis 17, dadurch gekennzeichnet, daß die Einrichtung zur Erfassung einer den aktuellen Stelldruck am Ausgang (11) der Hydraulikeinheit wenigstens mittelbar charakterisierenden Größe als Drucksensor ausgeführt ist.

19. Verfahren zur Umwandlung elektrischer Stellsignale in einen hydraulische Stelldruck mittels einer Druckstellvorrichtung mit den Merkmalen nach einem der Ansprüche 1 bis 18
19.1 bei welchem ein elektrisches Signal für einen Sollwert W einer einem gewünschten Sollwert des Stelldruckes W_{pAsoll} proportionalen elektrischen Größe (W_{Isoll}) vorgebbar ist;
19.2 bei welchem ein Istwert des aktuell am Ausgang der Hydraulikbaueinheit (2) anliegenden Stelldruckes _{pAist} fortlaufend ermittelt wird;
19.3 bei welchem der Istwert des Stelldruckes pAᵢₛₜ mit dem Sollwert W_{pAsoll} verglichen wird und bei Abweichung eine Sollwertvorgabe für eine erforderliche Magnetkraft W_{FMagnetsoll} gebildet wird und diese über Änderung des durch die Magnetspule fließenden Erregerstromes eingestellt wird.
